# EUROPEAN PATENT APPLICATION

(11) **EP 1 985 361 A1**
(43) Date of publication of application: **29.10.2008**
(21) Application number: 07106863.9
(22) Date of filing: 24.04.2007
(51) Int. Cl.: B01J 21/06, B01J 23/74, B01J 23/889, B01J 37/02

(54) **Method for depositing metal particles on a support**

(71) Applicant: Järäs, Sven, 187 70 Täby (SE); Lögdberg, Sara, 132 44 Saltsjö-Boo (SE); Boutonnet, Magali, 183 79 Täby (SE)
(72) Inventor: Järas, Sven, 187 70 Täby (SE); Lögdberg, Sara, 132 44 Saltsjö-Boo (SE); Boutonnet, Magali, 183 79 Täby (SE)
(74) Representative: Presland, Torbjörn

(57) **Abstract**

A method for depositing metal particles on a support, comprising the following steps: a) providing an organosol comprising a dispersed phase containing particles comprising a metal selected from cobalt, iron or nickel; b) contacting a support material with the organosol from step a) so as to form a mixture of the organosol and the support material; and c) adding a destabilisation agent to the mixture from step b) so as to destabilise the organsol, thereby depositing the particles on the support material. A catalyst obtainable by said method. Use of a catalyst obtainable by said method as a catalyst for carbon monoxide hydrogenation or the Fischer-Tropsch synthesis.

## Description

### Technical field

The present invention relates to a method for depositing metal particles on a support, to a catalyst obtainable by said method, and to the use of a catalyst obtainable by said method as a catalyst for carbon monoxide hydrogenation or the Fischer-Tropsch synthesis.

### Background art

In the preparation of, e.g., supported catalysts comprising metal particles, it is of importance to control the particle size of said metal particles. As an example, it may be desirable to control the particle size independently of the pore size of the support material. It is known to use variations of the microemulsion (ME) technique in order to prepare such supported catalysts comprising metal particles. For some metals however, state of the art ME methods do not easily allow deposition of metal particles on a support material.

The preparation of hydrocarbons from synthesis gas (syngas), i.e. a mixture of carbon monoxide and hydrogen, is known as Fischer-Tropsch (FT) synthesis. The FT synthesis occurs over metal catalysts such as iron, cobalt, nickel and/or ruthenium. Such metal catalysts may be used in the form of supported catalysts, comprising metal particles, prepared by an ME technique. Since the pore size of the support as well as the particle size of the metal may influence the FT selectivity, it is desirable to control the particle size independently of the pore size of the support material. However, state of the art ME methods do not allow deposition of metal particles of some FT catalyst metals.

WO 81/02688 discloses a stable suspension of particles of a metal belonging to the platinum group which consists of a microemulsion in which the particles are suspended. The suspension is prepared by dissolving a metal salt in a microemulsion, and reducing the salt to form a metal. The suspension of the invention can be used for making a catalyst by depositing the metal particles on a solid carrier. Thus, the solid carrier is moistened with the suspension, and the liquid of the microemulsion is evaporated.

However, the disclosure of WO 81/02688 does not relate to, and is not applicable to, metals belonging to the iron group.

US 4 714 692 discloses a catalyst composition comprising a metal component deposited on a support carrier wherein the average metal particle size is less than about 100 Å. Group VIII metals are preferred. A method of manufacture of the composition via the reverse micelle impregnation technique and the use of the composition in a Fischer-Tropsch conversion process is also disclosed. The catalyst composition is prepared from an impregnant medium by maintaining the metal impregnate ions contained in the water core of the reversed micelle in a nonreduced state. The metallic state of the particles is obtained by reduction in hydrogen, after drying and calcination of the impregnated precursor.

The method of US 4 714 692 of contacting a porous support with a metal ion containing w/o microemulsion as impregnant medium will inevitably lead to a loss of metal, since only a share of the micelles containing the metal ions will penetrate the pores of the support. Actually, it is probable that the ME is not stable for a long time in the presence of a support material, and hence the ME might be broken, implying that it is actually not the well-defined micelles that are impregnated but rather the water phase with the metal ions without the surfactant molecules.

Thus, it has been desirable to develop a method for depositing particles of important FT catalyst metals on a support overcoming the shortcomings mentioned above.

### Summary of the invention

An object of the present invention is to provide a route usable in the production of, e.g., a catalyst comprising metal particles of a metal from the iron group (i.e. Fe, Co, Ni) on a support. Another object of the invention is to provide a way of depositing metal particles comprising a metal from the iron group, prepared by a microemulsion technique, on a support.

An object of the invention is also to provide, in such routes or ways, control of the metal particle size independently of the pore size of the support material, in particular to provide small particles on large-pore support materials. Another object is to allow, in such routes or ways, a high loading of the metal on the support.

A further object of the invention is to provide a supported catalyst, such as a Fischer-Tropsch catalyst (i.e. a catalyst catalysing the synthesis of hydrocarbons from carbon monoxide and hydrogen), based on a metal from the iron group.

A general object of the present invention is to provide technically and economically improved alternatives to existing catalysts and existing processes in catalyst preparation.

The above-mentioned objects, as well as other objects of the invention which should be apparent to a person skilled in the art after having studied the description below, are in one aspect of the invention accomplished by a method for depositing metal particles on a support, comprising the following steps:
a) providing an organosol comprising a dispersed phase containing particles comprising a metal selected from cobalt, iron or nickel;
b) contacting a support material with the organosol from step a) so as to form a mixture of the organosol and the support material; and
c) adding a destabilisation agent to the mixture from step b) so as to destabilise the organsol, thereby depositing the particles on the support material.

In other aspects of the invention, the objectives are accomplished by a catalyst obtainable by the method described above and by the use of a catalyst obtainable by the method described above as a catalyst for carbon monoxide hydrogenation or the Fischer-Tropsch synthesis, preferably the Fischer-Tropsch synthesis.

Chemical characteristics of metals of the iron group, such as their very low (strongly negative) reduction potential, pose problems to a skilled man seeking to achieve the objects of the invention. These problems have been solved by the present invention.

Thus, the inventive method provides deposition of particles comprising a metal from the iron group from a sol onto the surface of a support material, e.g. onto the internal surface of a porous support material. Accordingly, it is made possible by the inventive method to adhere small iron group metal particles to a carrier and thus to employ in practise said particles in a catalytic chemical process.

By the present invention it is possible to reach high metal loadings (i.e. weight% metal on the support) which is important for commercial catalysts. A loading of approx. 12 weight% has been reached without any agglomeration of the metal particles and even if all metal is deposited during one cycle of the inventive method. However, the steps of the inventive method may well be repeated with a support material already subjected to said method.

Washing, drying, calcining and/or *in situ* reduction in hydrogen or any other reducing gas or gas mixture, i.e. common operations in the preparation and activation of, e.g., a catalyst, may take place before employing the product obtained by the inventive method as a catalyst. Such operations are well known by the skilled man and the performance of typical such operations are discussed in the Examples below.

In this application, a "metal particle" may comprise more than one metal or other substances in addition to the metal. Hence, in this application terms as "particle of a metal", "particle comprising metal" or "metal containing particle" have been used intechangeably with the term "metal particle".

In an embodiment of the invention, the organosol of step a) is obtained from a water-in-oil type microemulsion (also referred to as a reverse micelle microemulsion) comprising a dispersed phase containing ions of said metal, by reduction of said ions. Metal particles so obtained are monodisperse, which is desirable, e.g., in studies of the impact of particle size on catalyst activity or selectivity. The reduction may be performed by addition of BH₄⁻ ions to the microemulsion, preferably in a molar ratio of BH₄⁻ to metal ion of more than 2:1. It is preferred to add BH₄ions in the form of NaBH₄. Reduction of the metal ions by BH₄⁻ may, in addition to the desirable metal, result in formation of metal borides such as Co₂B. Such metal borides are oxidized in air at room temperature forming the metal, e.g., Co, and B₂O₃. The B₂O₃ is easily removed by washing with water. In case of preparing the microemulsion and organosol under inert atmosphere, it is therefore suitable to bring the organosol into contact with air after the reduction, in order to form the B₂O₃. If the washing steps of the catalyst precursor are performed in ambient air there will be no problem to form B₂O₃ from the metal boride, and hence no problem to wash away a major part of the boron. However, since boron may act as a catalyst promoter, some boron may also remain, to at least some extent (preferably < 0.2 wt% of calcined catalyst), with the catalyst precursor. Reduction may also be performed by addition of hydrazine to the microemulsion. It may be suitable to add a reduction agent, such as BH₄⁻ or hydrazine, the latter in presence of NaOH solution, to the microemulsion in the form of a second water-in-oil type microemulsion, comprising a dispersed phase comprising said reduction agent.

Said metal ions to be reduced may be provided as a solution of a metal salt, such as a nitrate, a chloride, an acetate, a citrate or an oxalate. However, if reduction is perfomed by addition of BH₄⁻, it is preferred to provide Co²⁺ as a chloride such as CoCl₂·6H₂O although chloride is a well-known catalyst poison. Co₂B, which is formed upon reduction of Co²⁺ with NaBH₄, catalyzes the reduction of nitrate to ammonia at room temperature [1]. The fact that Co(NH₃)₆²⁺ is a stable complex might lead to dissolution of the precipitated Co₂B and to formation of this complex, in case of using cobalt nitrate.

In an embodiment of the invention, in step c) the destabilisation agent is added before any substantial spontaneous destabilisation, i.e. destabilisation occuring before the addition of the destabilisation agent in step c), of the organosol has occured. It has been found that the organosol of the present invention tends to be prone to spontaneous destabilisation, in particular if a strong reduction agent has been used in provision of the organosol from a microemulsion comprising metal ions. Such uncontrollable destabilisation is undesirable but may be avoided in this embodiment. A meaning of "added before any substantial spontaneous destabilisation of the organosol has occured" is that addition of the destabilisation agent is to take place within 10 min., preferably within 3 min., after reduction of said metal ions.

In an embodiment of the invention, in step c) the destabilisation agent necessary for destabilising the organosol is added substantially in a single portion. Since the organosol of the present invention tends to be prone to spontaneous destabilisation, as mentioned above, an alternative, or complementary, a remedy to uncontrollable destabilisation is present in this embodiment. A meaning of "add substantially in a single portion" is that the amount of destabilisation agent necessary for destabilisation of the organosol is added without repeated interruptions as would have been the case if, e.g., dropwise addition was employed.

When the organosol of step a) is obtained from a water-in-oil microemulsion, as described above, the particle size is controllable via the water to surfactant ratio. Thus, smaller metal particles can be obtained using a lower ratio of water to surfactant. From such a microemulsion having a low ratio of water to surfactant, a very stable organosol may result. In order to achieve appropriate destabilisation in step c) of such an organosol, it has been found that water may be added to the organsol before adding the destabilisation agent. The addition of water does not influence the particle size of metal-comprising particles already formed and said addition of water allows for instant destabilisation of the organosol.

In an embodiment of the invention, the destabilisation agent is tetrahydrofuran or acetone, preferably acetone. Acetone as a destabilisation agent has surprisingly been found to provide the desirable adsorption of iron group metal particles to the support within the frames of the present invention.

In an embodiment of the invention, the particles have an average size less than 50 nm, preferably less than 20 nm. In another embodiment of the present invention, the metal is cobalt or iron, preferably cobalt. The smaller the metal particles, the larger the potential metal utilisation. The metal utilisation is often described by the metal dispersion which indicate the percentage of metal added to the support that is available to reactant gas molecules, i.e. the fraction of surface metal atoms. Surface metal atoms are atoms located on the surface of the metal particles. The metal particles in turn are located mainly inside the pores of the support material. Cobalt and iron are key FT catalyst metals. Due to the much higher cost of cobalt than of iron, the utilization of cobalt in a catalyst should be high. Although not necessary from a cost point of view, high utilization of iron may be relevant, e.g., when studying the impact of iron particle size on selectivity. In addition to the iron group metals according to the invention, other metals such as rhenium or elements from the platinum or noble metal groups may be co-deposited on the support. Co-deposition of multiple metals may be performed by inclusion of any additional metal(s) in the dispersed phase of the organosol of step a), or by inclusion of ions of said metal(s) in the dispersed phase of the microemulsion, if applicable. Alternatively, any additional metal(s) may be separately deposited before and/or after deposition of the iron group metal according to the invention.

In an embodiment of the invention, the support material has an average pore diameter (estimated as 4V/A, i.e. 4 * pore volume / surface area) of from about 10 to about 1000 nm, preferably from about 10 to about 500 nm. The support material preferably has a surface area of more than 10 m²/g. In an embodiment of the invention, the support material is γ-Al₂O₃, α-Al₂O₃, TiO₂, SiO₂, carbon nano fibers, carbon nano tubes or mixtures thereof, preferably γ-Al₂O₃ or TiO₂, most preferably TiO₂. The choice of support, and the pore size of the support, respectively, are important to product selectivity in the Fischer-Tropsch synthesis. Reports indicate that larger pores favour longer hydrocarbons, i.e. give higher S_{C5+}. Such selectivity is desirable, e.g., if the wanted final FT product is diesel.

In conclusion, in order to reach a high catalytic activity per gram metal, at the same time as achieving a high S_{C5+}, small metal particles supported on a carrier material with relatively large pores seem viable. In an embodiment of the invention the average pore diameter of the support material is larger than the particle size of the metal particles.

The organosol of the present invention, and the microemulsion, if applicable, comprises a continuous phase, a dispersed phase and a surfactant.

The dispersed phase of the organosol contains metal particles as discussed above. The dispersed phase of the microemulsion, if applicable, correspondingly contains metal ions as discussed above, suitably in aqueous solution.

Some microemulsion systems which have been used for cobolt microemulsions and which are contemplated for use in the present invention are listed below.

| | Dispersed phase | Surfactant and/or co-surfactant | Continuous phase |
|---|---|---|---|
| [2] | H₂O | AOT | iso-Octane |
| [2] | H₂O | DDAB | Toluene |
| [3] | H₂O | CTAB | Hexane-1-ol |
| [4] | H₂O | CTAB/n-Butanol | n-Octane |

| | | | |
|---|---|---|---|
| AOT = sodium di-2-ethyl hexylsulfosuccinate, an anionic surfactant. DDAB = didodecyldimethylammonium bromide, a cationic surfactant. CTAB = cetyltriammonium bromide, a cationic surfactant. | | | |

In order to achieve particularly good results in the present invention, it is preferred to use a non-ionic surfactant. It has been found that the counter-ions of anionic or cationic surfactants may contaminate the metal containing particles formed. In the selection of non-ionic surfactant, compatibility with the reduction agent used in step c) must be considered. It has been found that surfactants mentioned below work well together with, e.g., BH₄⁻ as a reduction agent.

In an embodiment of the invention, the organosol comprises a continuous phase containing a hydrocarbon such as cyclohexane, xylene, iso-octane, toluene or hexane-1-ol, suitably cyclohexane or xylene, preferably cyclohexane.

In an embodiment of the invention, the organosol comprises a polyoxyethylene alkylphenyl ether, preferably a polyoxyethylene (x) nonylphenyl ether wherein x = 5 or 6, more preferably polyoxyethylene (6) nonylphenyl ether, as a surfactant. Another preferred surfactant is polyethylene glycol p-(1,1,3,3-tetramethylbutyl) phenyl ether (available as Triton X-100).

In an embodiment of the invention, the microemulsion comprises a continuous phase containing a hydrocarbon such as cyclohexane, xylene, iso-octane, toluene or hexane-1-ol, suitably cyclohexane or xylene, preferably cyclohexane.

In an embodiment of the invention, the microemulsion comprises a polyoxyethylene alkylphenyl ether, preferably a polyoxyethylene (x) nonylphenyl ether wherein x = 5 or 6, more preferably polyoxyethylene (6) nonylphenyl ether, as a surfactant. Another preferred surfactant is polyethylene glycol p-(1,1,3,3-tetramethylbutyl) phenyl ether (available as Triton X-100).

In systems comprising cyclohexane as the continuous phase, it is preferred to use a non-ionic surfactant such as polyoxyethylene (6) nonylphenyl ether or polyethylene glycol p-(1,1,3,3-tetramethylbutyl) phenyl ether (available as Triton X-100); polyoxyethylene (6) nonylphenyl ether is preferred. It is believed that a system comprising cyclohexane as the continuous phase and polyoxyethylene (6) nonylphenyl ether as a surfactant has not been used before in the preparation of cobalt particles by the microemulsion technology.

### Brief description of the drawings

Figure 1 refers to Example 1 and shows hydrocarbon (HC) formation rate in five different periods. The CO conversion in period I is given in the figure for each catalyst.
Figure 2 refers to Example 1 and shows selectivity (C-atom) to C₅₊ (CO₂-free), S_{C5+}, in five different periods.
Figure 3 refers to Example 1 and shows formation rate of the desired C₅₊ fraction in five different periods.
Figure 4 refers to Example 3 and shows HC formation rate in five different periods.
Figure 5 refers to Example 3 and shows S_{C5+} in five different periods.
Figure 6 refers to Example 3 and shows formation rate of the desired C₅₊ fraction in five different periods.

### Examples

### Fischer-Tropsch experiments

The FT synthesis experiments were carried out in a 0.93 cm i.d. stainless steel fixed bed reactor. Approximately 1-1.5 g of calcined Co catalyst (53-90 µm) was diluted with inert solid SiC (75-150 µm) to improve the isothermicity of the bed, the total weight of the bed being 5 g for γ-Al₂O₃ and above 10 g for TiO₂. The larger amount of SiC for the TiO₂-supported catalysts was used since these catalysts were more prone to form hot spots in the bed. Reduction of catalyst was made *in situ* in a H₂-flow of 250 Ncm³/min at atmospheric pressure at 623 K for comparative incipient wetness impregnation (IW) catalysts and at 673 K for the inventive microemulsion (ME) catalysts for 16 hours with a heating rate of 1 K/min from ambient temperature. The catalyst was then cooled to 443 K in flowing H₂ and flushed with He for another hour before the reactor system was pressurized to 20 bars. Then a syngas flow of 250 Ncm³/min was introduced with a H₂/CO molar ratio of 2.1. The feed also contained 3 mol% of N₂ as internal standard.

The reactor temperature was then slowly increased to the desired value of 483 K. Product gases were analysed on line by a HP 5890 gas chromatograph equipped with a thermal conductivity detector (TCD) and a flame ionisation detector (FID). A Carbosieve packed column prior to the TCD separated N₂, CO, H₂, CO₂ and H₂O, and a GS-Q capillary column prior to the FID separated Cₙ-hydrocarbons (n = 1 to 9). Initial reactant flow (period I) was 250 Ncm³/min (or gas hourly space velocity (GHSV) 12000-15000 Ncm³/g_{cat}.h depending on amount of catalyst) and held for approximately 24 hours. Then the GHSV was lowered to achieve approximately 40 % CO conversion (period II) and held for another 24 hours. The reason for the last step is to be able to compare the product selectivities at similar conversion.

In period III, 20 % of the feed was water vapour, keeping the syngas flow at the same rate as in period II. In period IV, the water vapour content in the feed was increased to 33 %. In the final period, V, the feed was dry again, and hence the conditions were similar to those in period II. Water is added to the feed in order to simulate the higher water pressures existing in a slurry phase reactor at high syngas conversions, in order to investigate possible kinetic effects as well as deactivation effects. The introduction of water in the feed, keeping the total pressure constant at 20 bars, implies that the reactant pressures are reduced, and hence a certain decrease in the reaction rate is expected even if water would have no kinetic effect.

### Catalyst preparation

The support materials used in the following examples are γ-Al₂O₃ (Puralox SCCa-5/200 from Sasol) and TiO₂ (Degussa P25) and they were dried at 393 K for 6 h and then calcined in flowing air for 10 h at 773 K and 973 K (ramp = 1 K/min), respectively. This was done in order to purify the γ-Al₂O₃, and to transfer most of the TiO₂ to the rutile form. Also α-Al₂O₃ was used as support and was prepared from the γ-Al₂O₃ support by calcining it in flowing air at 1273 K for 10 h. The target composition of all catalysts was 12 wt% Co and 0.5 wt% Re. Physical properties of the support materials are shown in Table 1.

**Table 1**

| Support | Pore diameter at largest dVol/dD [nm]^{a} | Average pore diameter [nm]^{b} | Surface area (A) [m²/g] | Pore volume (V) [cm³/g] |
|---|---|---|---|---|
| γ-Al₂O₃ | 7.4^{c} | 10.4 | 193^{c} | 0.50^{c} |
| α-Al₂O₃ | 65^{d} | 68 | 11.1^{d,e} | 0.19^{d,f} |
| TiO₂ | 100^{d} | 257 | 23.2^{d,e} | 1.49^{d,f} |

| | | | | |
|---|---|---|---|---|
| ^{a} The pore diameter at which the absolute value of the derivative *(d(cumulative pore volume)*/*d(pore diameter)*) is largest. This implies that the sizes of the interstices between the support particles (~ 5-120 µm for both α-Al₂O₃ and TiO₂) that are measured with Hg intrusion are not considered. ^{b} The average pore diameter (dp) estimated from surface area (A) and pore volume (V) according to: dp = 4·*V*/*A* ^{c} Calculated from N₂ adsorption measurements. ^{d} Calculated from Hg porosimetry measurements. ^{e} The area for the interstices is negligible. ^{f} The Hg volume penetrated into the interstices between the support particles was subtracted from the total Hg intrusion volume. | | | | |

Comparative catalysts prepared with incipient wetness impregnation have IW as prefix, and inventive catalysts prepared by microemulsion have ME as prefix. The IW catalysts were prepared by impregnation of the supports with an aqueous solution of Co(NO₃)₂·6H₂O (ACS reagent, ≥ 99.0 %, Fluka) and HReO₄ (Alfa Aesar). Three impregnations, with intermediate drying at 373 K for 1 h, were used. The powder was then dried at 393 K for 3 h, and calcined in air at 573 K for 16 h (ramp = 1 K/min) in a crucible standing in the oven.

In the following examples, two different recipes of the microemulsion have been tested. The following components were used in order to form microemulsions:
*Oil phase:* cyclohexane (ACS reagent, ≥ 99.0 %, Sigma Aldrich)
*Surfactant:* Berol 02, polyoxyethylene (6) nonylphenyl ether (Akzo Nobel)
*Water phase:* aqueous solution of CoCl₂·6H₂O (99.9 % (metals basis), Alfa Aesar) and HReO₄ (Alfa Aesar)

| ME (1) | | | |
|---|---|---|---|
| | Composition [wt%] | Co²⁺ conc. in water phase [M] | Re⁷⁺ conc. in water phase [mM] |
| Cyclohexane | 69.8 | | |
| Berol 02 | 19.9 | | |
| Water phase | 10.3 | 0.12 | 1.6 |

| ME (2) | | | |
|---|---|---|---|
| | Composition [wt%] | Co²⁺ conc. in water phase [M] | Re⁷⁺ conc. in water phase [mM] |
| Cyclohexane | 78.9 | | |
| Berol 02 | 20.5 | | |
| Water phase | 0.6 | 6.3 | 84 |

The water phase includes the aqueous solutions of CoCl₂·6H₂O and HReO₄. In ME (2), the water in the water phase is only the crystal water in CoCl₂·6H₂O and the small amount of water needed to dilute the original 75 wt% HReO₄ solution (from Alfa Aesar) to a measurable amount. This means that in case of ME (2), the CoCl₂·6H₂O crystals were added as are to the mixture of cyclohexane, Berol 02 and HReO₄ solution. The resulting microemulsion had a blue colour due to the low coordination number of water molecules around Co²⁺, as opposed to the pink colour of ME (1).

A molar ratio of BH₄⁻/Co²⁺ of 3 was used in order to minimize the unreduced Co²⁺ [5]. The BH₄⁻ was added in form of a 10 M aqueous solution of NaBH₄ [6]. The reduction step was performed in a N₂ atmosphere in a glove bag. The ME was first deoxygenated by flowing N₂ through it for a couple of minutes, prior to the dropwise addition of NaBH₄ solution. Under the NaBH₄ addition, the beaker containing the ME was put in a cold water (283 K) bath.

The Co containing particles formed in the microemulsion upon reduction were deposited onto the support by destabilization of the organosol prepared from ME (1) with acetone (50 cm³ acetone / 100 g ME) in the presence of the support under vigorous stirring for 2-3 h. All acetone was added at once. In order to destabilize the organosol prepared from ME (2), which is much more stable than the organosol prepared from ME (1) due to the low water content, 6.5 cm³ water and 65 cm³ acetone /100 g ME was added at once to the organosol in the presence of the support and the mixture was stirred for approximately 2 h.

The target composition of the ME catalysts was 12 wt% Co and 0.5 wt% Re on the support. All properties (e.g. degree of reduction, Co dispersion) are calculated on the target composition of Co, i.e. 12 wt%, since the measured Co concentration is close to this value for all catalysts, and since the true wt% Co is believed to be closer to 12 wt% than the measured ones due to high uncertainties of the elemental analyses. The preparation procedure resulted in that almost no Re was present in the final catalysts.

It was tested to deposit 12 wt% Co to the support in one deposition, and also to divide the total Co (and Re) amount in six depositions (i.e. 2 wt% Co and 0.083 (= 0.5/6) wt% Re per deposition). After each deposition, the catalyst powder was washed with ethanol, acetone and water at room temperature, in order to remove rests of the surfactant and also formed NaCl and boron compounds, then dried at 323 K overnight. After the last deposition, the water for the wash was warmer (323 or 373 K). After the final deposition, the catalyst was dried for at least 16 h at 323 K, and then calcined in flowing air at 573 K for 16 h (ramp = 1 K/min).

### Example 1

A ME (1) catalyst supported on TiO₂ made by six depositions is compared with conventional catalysts supported on γ-Al₂O₃, α-Al₂O₃ and TiO₂ prepared by incipient wetness impregnation.

There are many reports on that larger pores in the support favor the selectivity to higher hydrocarbons [7-10]. The existence of a Co particle size effect on selectivity is however widely disputed. There are publications claiming that Co particle sizes affect the S_{C5+}. Most results point in the direction of smaller Co particles giving lower S_{C5+} [8,11-13]. By using a preparation technique in which the pore size of the support does not influence the size of the Co particles, it may be possible to separately study the impact of Co particle size on FT selectivity.

The catalyst compositions are shown in Table 2. The washing of the ME catalyst results in a loss of Re.

**Table 2**

| Catalyst | wt% | wt% | wt% | wt% | wt% |
|---|---|---|---|---|---|
| | Co | Re | B^{a} | Na^{a} | Cl^{d} |
| IWγ-Al₂O₃ | 11^{a} | 0.3^{c} | | | |
| IWα-Al₂O₃ | ~ 12 | ~ 0.5 | | | |
| IWTiO₂ | 10^{b} | 0.5^{b} | | | |
| METiO₂2%X6dep (1) | 11^{b}, 12.2^{a} | 0.07^{b}, 0.05^{c} | 0.15 | 0.013 | < 0.02 |

| | | | | | |
|---|---|---|---|---|---|
| ^{a} Analysis by ICP-AES. ^{b} Analysis by XRF. ^{c} Analysis by ICP-QMS. ^{d} Analysis by ICP-SFMS. | | | | | |

Some characterization results of the catalysts are shown in Table 3.

**Table 3**

| Catalyst | Reduction temperature [K]^{a} [K]^{a} | Degree of reduction [%]^{b} [%]^{b} | Co dispersion [%]^{c} [%]^{c} | Co particle size (XRD) [nm]^{d} |
|---|---|---|---|---|
| IWγ-Al₂O₃ | 623 | 63 | 9.7 | 12 |
| IWα-Al₂O₃ | 623 | 67 | 3.5 | 37 |
| IWTiO₂ | 623 | 66 | 3.0 | 26 |
| METiO₂2%X6dep (1) | 673 | 64 | 5.5 | 12 |

| | | | | |
|---|---|---|---|---|
| ^{a} The ME catalyst was reduced at a higher temperature than the IW catalysts. ^{b} Determined by oxygen titration of reduced catalyst at 673 K. ^{c} Determined by H₂ chemisorption at 313 K, assuming adsorption on Co atoms only (12 wt% Co assumed). ^{d} Co metal particle size estimated from XRD data for calcined catalyst, using the Scherrer equation [14] and d(Co) = 0.75·d(Co₃O₄) [15]. | | | | |

As is well-known, the Co-particle size is partly governed by the pore size of support material upon impregnation. Therefore, it is natural that IWTiO₂ and IWα-Al₂O₃ have much larger Co particles than IWγ-Al₂O₃. However, by using the ME technique instead we have succeeded to prepare smaller Co particles in the large pores of TiO₂. The average Co-particle size in the METiO₂ catalysts is approximately the same as the average Co-particle size in IWγ-Al₂O₃. This implies that the Co dispersion is increased by 80 % by using the ME technique compared to the IW technique on TiO₂. The high dispersion of the ME catalyst is reflected in the activity measurements.

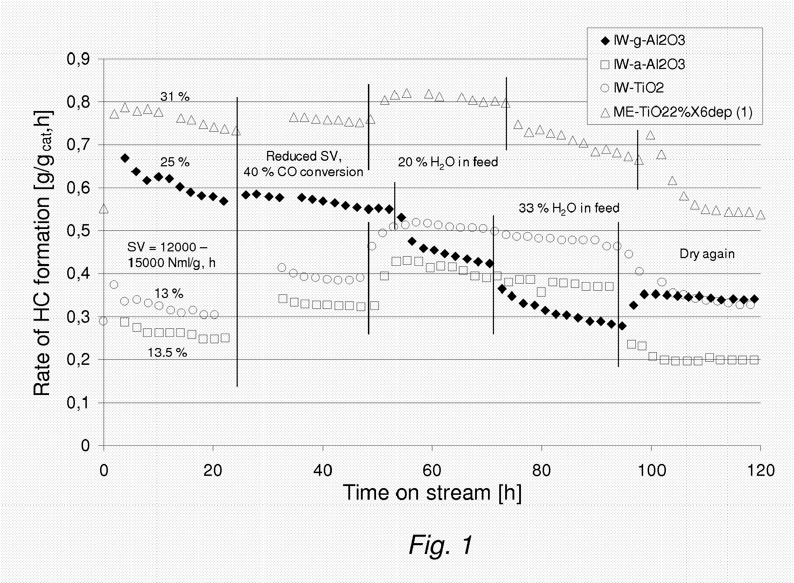

The activity results (expressed as grams of hydrocarbons formed per gram catalyst and hour) for IWγ-Al₂O₃, IWTiO₂ and METiO₂2%X6dep (1) are shown in Figure 1.

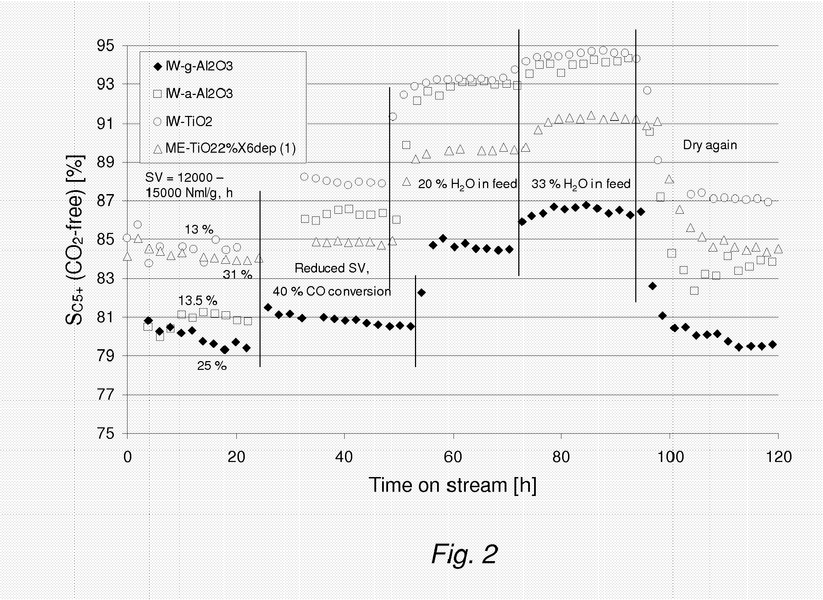

The selectivities to C₅₊ (S_{C5+}), i.e. to hydrocarbons with five or more C-atoms, for the same catalysts are shown in Figure 2. Since the selectivity in the FT reaction is very sensitive to the CO conversion, the values are only directly comparable at the same conversion, i.e. in the second period where the conversions for all catalysts are approximately 40 %. Table 4 shows the conditions and FT results for period II, i.e. at 40 % CO conversion for the catalysts.

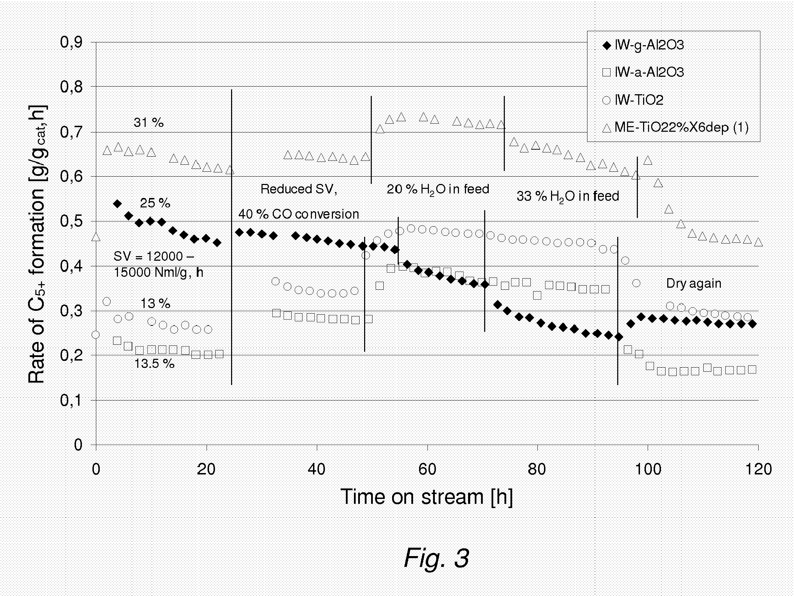

In Figure 3 the formation rates to C₅₊ products are shown. It is now clear that the METiO₂ catalyst is superior the other catalysts in production rate (per weight Co) of the desired products. Furthermore, although having approximately the same Co particle size as IWγ-Al₂O₃, the METiO₂ catalyst is not deactivated as rapidly. However, compared to the IWTiO₂, the METiO₂ deactivates more rapidly, possibly due to the smaller particles that are known to be more easily reoxidized in the presence of water.

**Table 4. Conditions and FT results for period II, i.e. at 40 % CO conversion for the catalysts.**

| Catalyst | Flow rate of syngas [Ncm³/g_{cat},h] | CO conversion [%] | HC formation rate [g/g_{cat,}h] | S_{CH4} [%]^{a} | S_{C5+} [%]^{a} | TOF [S⁻¹]^{b} [s |
|---|---|---|---|---|---|---|
| IWγ-Al₂O₃ | 7267 | 39.4 | 0.58 | 9.6 | 81.2 | 0.06 |
| IWα-Al₂O₃ | 4293 | 38.7 | 0.33 | 7.4 | 86.6 | 0.07 |
| IWTiO₂ | 4973 | 41.5 | 0.41 | 7.1 | 88.2 | 0.11 |
| METiO₂2%X6dep (1) | 9670 | 39.2 | 0.76 | 8.7 | 84.9 | 0.14 |

| | | | | | | |
|---|---|---|---|---|---|---|
| ^{a} C-atom selectivities, CO₂-free. ^{b} Turn-over-frequencies for fresh catalyst (after 10 h on stream) calculated from gas flow rates and CO conversions in period I, and from H₂ chemisorption data. | | | | | | |

Probably, the lower amounts of H₂ chemisorption (dispersion) of the METiO₂ catalyst compared to IWγ-Al₂O₃ (Table 3) despite their similar Co-particle size and degree of reduction, is due to that the Co particles are partly decorated with overlayers of TiOₓ. This kind of phenomenon is often seen for catalyst with SMSI (strong metal-support interactions) effects, and results in a lowering of the amount of chemisorbed hydrogen [16, 17]. The effect of decoration with TiOₓ overlayers disappears at higher conversions under FT-reaction conditions [18].

It is commonly believed that the site activity, i.e. TOF (turnover frequency), is essentially constant and does not vary with support material or promoters for Co-based catalysts in the FT reaction [19]. If the dispersion values from the H₂ chemisorption measurements are used to calculate TOF for the catalysts, the METiO₂ catalyst has twice the TOF of the IWγ-Al₂O₃ catalyst (see Table 3). If, instead, the TOF is calculated from the particle size obtained from XRD and from the degree of reducibility, the TOFs will be very similar.

Finally, it should be mentioned that a promoting effect of boron on Co in Fischer-Tropsch reaction has been reported. Small amounts of B may increase the activity (WO 02/068564) and the selectivity to C₅₊ [20]. The possible increase in activity was reported to be approximately 20 %, and promotion by boron was also claimed to give a higher stability and a longer catalyst lifetime (WO 02/068564). For the new catalyst in the current invention, the activity increase was almost 100 %. Some minor part of this might be due to the residual B in the sample (approx. 0.15 wt% in METiO₂2%X6dep (1)), but the major part can certainly be ascribed to the increased Co dispersion due to the reduction in cobalt particle size compared to the IWTiO₂ catalyst. In order to study the effect of boron on TiO₂ and γ-Al₂O₃ supported 12 wt% Co catalysts (without Re), 0.15 wt% of B was co-impregnated with Co to these support materials. The B addition significantly increased the S_{C5+} for both IWTiO₂ (85.7 → 88.7 % at 35 % CO conversion) and IWγ-Al₂O₃ (78.9 % → 81.3 % at 35 % CO conversion). Thereby it could be concluded that part of the high S_{C5+} of the METiO₂2%X6dep (1) catalyst is explained by the B content. However, the B content in METiO₂2%X6dep (1) cannot explain all of the higher S_{C5+} compared to the S_{C5+} for IWγ-Al₂O₃. It is natural to compare these two catalysts since they have similar Co-particle sizes. The results indicate that it is not the larger Co-particle size in IWTiO₂ that has the major responsibility for its higher S_{C5+} compared with IWγ-Al₂O₃. Generally, this suggests that it is not the larger Co-particle size of a catalyst that gives it superior S_{C5+}, but rather the choice of support, be it due to its physical and/or chemical properties, and of course of added promoters. The fact that IWTiO₂ achieves a higher S_{c5+} than IWα-Al₂O₃, although having smaller average Co particles (as measured by XRD), also illustrates the lack of a direct correlation between a large Co-particle size and a high S_{C5+}. The possibility of a significant Co-crystallite growth upon water exposure in METiO₂2%X6dep (1), and therefore an improved S_{C5+}, can be ruled out since this would imply a much larger drop in activity than observed for this catalyst.

### Example 2

The impact of number of depositions by ME (1) on TiO₂ on the final Co dispersion was studied. Six depositions of 2 wt% Co and 0.083 wt% Re, and one deposition of 12 wt% Co and 0.5 wt% Re, were made respectively. Both ME catalysts were washed with water of 373 K after the last deposition. The resulting compositions are shown in Table 5, together with two impregnated catalysts as well.

**Table 5**

| Catalyst | wt% Co | wt% Re |
|---|---|---|
| IWγ-Al₂O₃ | 11^{a} | 0.3^{c} |
| IWTiO₂ | 10^{b} | 0.5^{b} |
| METiO₂2%X6dep (1) | 11^{b} | 0.07^{b} |
| METiO₂12%X1dep (1) | 9^{b} | 0.02^{b} |

| | | |
|---|---|---|
| ^{a} Analysis by ICP-AES. ^{b} Analysis by XRF. ^{c} Analysis by ICP-QMS. | | |

From Table 6 it is clear that a similarly high Co dispersion is obtained by just one deposition as with six depositions, which simplifies and quickens up the catalyst preparation substantially.

**Table 6**

| Catalyst | Co dispersion [%] | Co particle size (XRD) [nm] |
|---|---|---|
| IWγ-Al₂O₃ | 9.7 | 12 |
| IWTiO₂ | 3.0 | 26 |
| METiO₂2%X6dep (1) | 5.5 | 12 |
| METiO₂12%X1dep (1) | 5.1 | 12 |

### Example 3

In this example, the two different ME recipes were tested on TiO₂. Both ME catalysts were washed with water of 373 K in the last wash. TEM images of ME (1) and ME (2) show that the smaller water amount in ME (2) results in smaller Co particles, which is a well-known phenomenon [21]. Of course, the final particle size in the supported catalyst often deviates significantly from the initial size, due to agglomeration.

For simplicity, only one deposition of ME (2) was used since Example 2 showed that the number of depositions only had a minor effect on the final catalyst, at least with TiO₂ as the support. The composition of the ME catalysts are shown in Table 7 together with the impregnated one. The B content of the ME (2) catalyst is significantly higher than that of the ME (1) catalyst.

**Table 7**

| Catalyst | wt% | wt% | wt% | wt% | wt% |
|---|---|---|---|---|---|
| | Co | Re | B^{a} | Na^{a} | Cl^{d} |
| IWTiO₂ | 10^{b} | 0.5^{b} | | | |
| METiO₂2%X6dep (1) | 11^{b}, | 0.07^{b}, | 0.15 | 0.013 | < 0.02 |
| | 12.2^{a} | 0.05^{c} | | | |
| METiO₂12%X1dep (2) | 10.8^{a} | 0.06^{c} | 0.23 | < 0.01 | < 0.02 |

| | | | | | |
|---|---|---|---|---|---|
| ^{a} Analysis by ICP-AES. ^{b} Analysis by XRF. ^{c} Analysis by ICP-QMS. ^{d} Analysis by ICP-SFMS. | | | | | |

Table 8 shows that the ME (2) catalyst has an XRD-amorphous Co phase. It has been reported earlier that B may lead to amorphous Co phases [5] and also decreases the reducibility of the Co [20]. This leads to a reduced Co dispersion for the ME (2) catalyst compared to the ME (1) catalyst. It is also possible that the smaller Co particles visible from the TEM image of ME (2) are not well distributed over the support, so that in the final calcined catalyst the Co unities are not small but rather large, however un-crystalline, thereby giving a low dispersion.

**Table 8**

| Catalyst | Reduction temperature | Degree of reduction | Co dispersion | Co particle size |
|---|---|---|---|---|
| | [K] | [%] | [%] | (XRD) |
| | | | | [nm] |
| IWTiO₂ | 623 | 66 | 3.0 | 26 |
| METiO₂2%X6dep (1) | 673 | 64 | 5.5 | 12 |
| METiO₂12%X1dep (2) | 673 | 58 | 4.0 | amorph. |

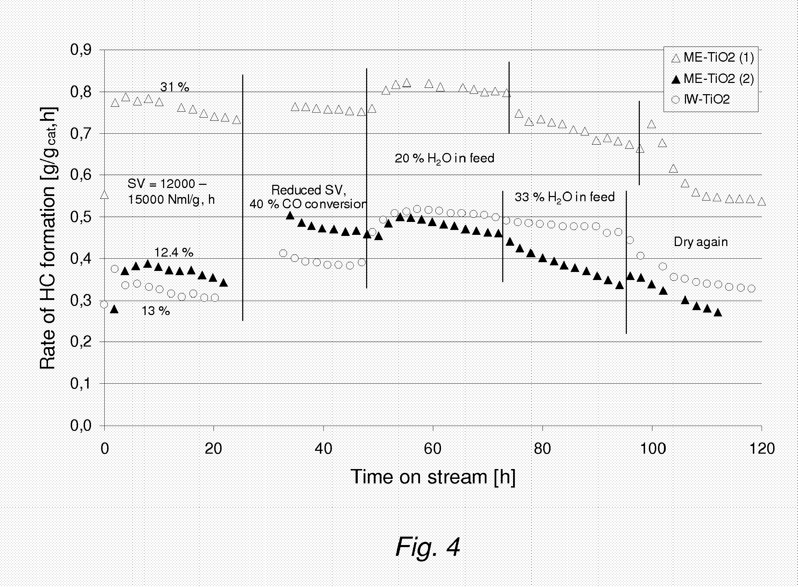

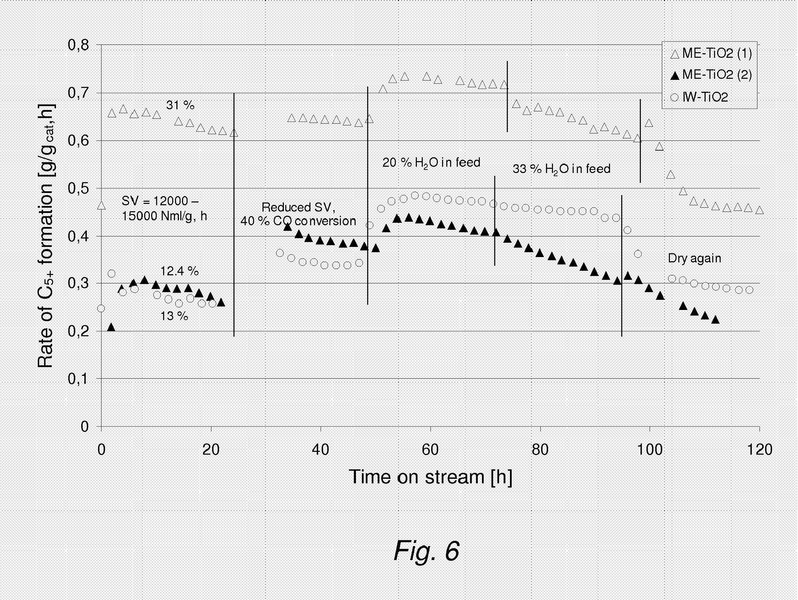

Table 9 shows that the TOF of ME (2) is similar to that of IWTiO₂, and also the total HC formation rate due to similar Co dispersions. The lower TOF as compared to ME (1) might be due to the higher B content. But it has also been reported that small Co particles (< 6 - 8 nm) might have lower TOFs than larger [12, 13]. In Figures 4-6 the HC formation rate, S_{C5+} and the formation rate to C₅₊ are shown for the two ME catalysts as well as for IWTiO₂.

**Table 9. Conditions and FT results for period II, i.e. at 40 % CO conversion for the catalysts.**

| Catalyst | Flow rate of syngas [Ncm³/g_{cat},h] | CO conversion [%] | HC formation rate [g/gₐₜ,h] | S_{CH4} [%] | S_{C5+} [%] | TOF [s⁻¹] |
|---|---|---|---|---|---|---|
| IWTiO₂ | 4973 | 41.5 | 0.41 | 7.1 | 88.2 | 0.11 |
| METiO₂2%X6dep (1) | 9670 | 39.2 | 0.76 | 8.7 | 84.9 | 0.14 |
| METiO₂12%X1dep (2) | 5912 | 40.4 | 0.47 | 9.8 | 82.7 | 0.09 |

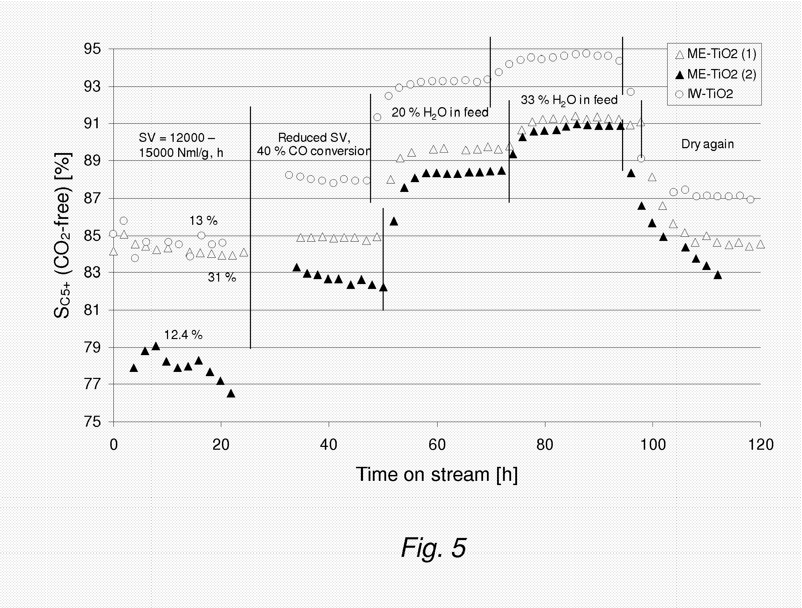

It is typical for the FT synthesis that a higher conversion normally results in a higher S_{C5+}. The data in Table 10 shows that it is obvious that upon water exposure METiO₂ (2) increases its S_{c5+} significantly, reaching the same level as METiO₂ (1) (see Figure 5). The conversion in period V is only around 25 % but the S_{c5+} is still higher than in period II where the conversion is 40 %. For METiO₂ (1), the S_{c5+} is only slightly increased upon water exposure, showing that this catalyst is much more stable than that prepared by ME (2). The increase in S_{C5+} for METiO₂ (2) might be explained by the removal of some B upon water exposure, since it is known that a high amount of B gives a lower S_{c5+} [20]. The B/Co ratios in fresh (calcined) catalysts and in used catalysts are shown in Table 11. It should be mentioned that the Co/Ti ratios are the same for the fresh catalysts as for the used. It is also probable that the amorphous Co phase crystallizes during the water exposure, as was seen for a ME catalyst supported on γ-Al₂O₃ (not shown here). Unfortunately, it is not possible to estimate the crystallite growth from XRD on TiO₂ supported catalysts, since a TiO₂ peak overlaps the main Co⁰ peak.

**Table 10. CO conversion and S_{C5+} data for ME-TiO₂ (2), before and after water exposure.**

| Period | CO conversion [%] | S_{c5+} (CO₂-free) [%] |
|---|---|---|
| II middle | 40 | 82.4 |
| V start | 25.8 | 84.4 |
| V end | 23.2 | 82.9 |

**Table 11**

| Catalyst | wt% B / wt% Co | |
|---|---|---|
| | Before FT | After FT |
| METiO₂2%X6dep (1) | 0.014 | 0.0042 |
| METiO₂12%X1dep (2) | 0.022 | 0.0051 |

The comparably low activity of ME-TiO₂ (2) is most probably a result of the lower degree of reducibility and the higher initial B content. Probably, after some B removal and some degree of crystallite growth (in the FT reactor), this catalyst is much more easily reduced. Hence, after an *in situ* re-reduction with hydrogen the ME-TiO₂ (2) would possess an improved activity.

### Conclusion

The microemulsion technique is a suitable tool for preparing the active metal phase (Co) of large-pore supported Fischer-Tropsch catalysts. The pores of the support material must of course be larger than the prepared Co-containing particles (including adsorbed surfactant molecules not removed from the particle during the destabilisation) in order for the particles to enter the pores, which probably is needed in order to obtain a high S_{C5+}. The results indicate that it is not the larger Co-particle size that has the major responsibility for TiO₂ giving higher S_{C5+} than γ-Al₂O₃. Generally, this suggests that it is not the larger Co-particle size of a catalyst that gives it superior S_{c5+}, but rather the choice of support, at least if the Co particles are larger than approximately 8 - 10 nm. It is possible that the pore size of the support is an important parameter in determining the selectivity.

It is probable that different recipes of the ME and different supports require different washing procedures in order to remove sufficient boron. Furthermore, after being used in the Fischer-Tropsch synthesis for some hours at a relatively high conversion (40 %), both the activity and the S_{c5+} seem to improve for the ME catalysts with amorphous Co phase. This is probably due to that the amorphous Co phase crystallizes into well-defined Co crystals, as evidenced for a ME (1) catalyst supported on γ-Al₂O₃ and a ME (2) catalyst supported on TiO₂, both originally with XRD amorphous Co phases. The boron content had decreased significantly after five days on stream, which may be the reason for the crystallization.

By varying the recipe for the microemulsion, Co particles with different sizes can be prepared. Smaller Co particles imply a higher possible Co utilization, i.e. a higher possible activity per gram of Co, which is desirable. However, the smaller Co particles, or more correctly the XRD amorphous ones, seem to be more difficult to reduce. This lower reducibility and/or the lower crystallinity results in lower total activity per gram Co and also a lower TOF and S_{c5+}. Possibly, the boron content is critical. Too much B gives amorphous hard-to-reduce Co phase, while a small amount of B improves the S_{c5+.} It has been reported earlier that there is a critical smallest Co particle size needed for a high TOF and S_{c5+} [12, 13]. As mentioned above, it is possible that the amorphous Co phase in some of the ME catalysts crystallizes during the FT experiment, with an increase in activity and S_{C5+} as a result. However, in order to reach high enough activities and selectivities of the catalysts with XRD amorphous Co phase, a second reduction after the crystallization is probably necessary.

The ME (1) catalyst supported on TiO₂ combines the desired properties of the conventional large-pore support materials and small-pore support materials: a high selectivity to higher hydrocarbons and a high cobalt utilization, respectively, resulting in a very high productivity of C₅₊. It may be prepared by a single deposition of the ME particles onto the TiO₂ support. The major part of the Re added to the microemulsion was removed upon washing of the catalyst. The S_{c5+} is expected to be even higher if the amount of Re in the catalyst could be preserved at 0.5 wt%. Possibly, the ratio of BH₄⁻ / Co could be increased in order to make sure that the rhenium ions are reduced to the metal. Addition of Re by impregnation of the already prepared ME catalyst resulted in a lowered S_{C5+} and a lowered TOF, probably due to that the Re is only present at the surface of the Co, and thereby covering some of the Co sites.

### Detailed preparation of a preferred catalyst

1. Cyclohexane and Berol 02 are mixed in a big flask.
2. CoCl₂·6H₂O is dissolved in deionised water and a HReO₄ solution is added to this aqueous Co solution and mixed.
3. The Co-Re solution is poured into the oil/surfactant mixture under stirring and a microemulsion (ME) is formed.
4. The ME is then put in a cold water-bath (approximately 10 °C) for approximately 5 min.
5. Inside a glove bag, NaBH₄ is dissolved in deionised water to form an aqueous solution of NaBH₄.
6. The NaBH₄ solution is then added to the cold ME dropwise under vigorous stirring, forming a blackcoloured sol. The reduction of the microemulsion is preferentially performed in a glove bag filled with nitrogen for safety reasons, since hydrogen is released in the reaction between BH₄⁻ and Co²⁺. Before the reduction, most of the air dissolved in the ME is removed by bubbling nitrogen through it for a couple of minutes inside the nitrogen-filled glove bag.
7. The sol is then stirred/shaken until no more gas (hydrogen) is released from it (this is easily done by shaking the flask by hand and now and then unscrewing the glass cork to release the pressure due to formed hydrogen).
8. The hydrogen and nitrogen is then carefully purged from the glove bag into a fume hood, and the bottled flask containing the sol is taken out from the nitrogen atmosphere.
9. Support material is poured into the sol under vigorous stirring, directly followed by the addition of acetone. The mixture is vigorously stirred for approximately 2 h.
10. After stopping the stirring, the support material (now with Co and Re on it) settles to the bottom of the flask, leaving a colourless mixture of cyclohexane, surfactant and acetone above, which easily can be pored off.
11. The support material with Co and Re, i.e. the catalyst precursor, is then washed several times with ethanol, then several times with acetone and finally several times with deionised water (if several depositions are made, room temperature water may be used except for the wash after the final deposition in which warmer water is recommended (323-373 K)). The volume of washing liquid in each wash should be at least twice the volume of the wet catalyst precursor volume. In each wash, the catalyst precursor is slurried in the liquid and then centrifuged for a short period in order for the catalyst precursor to sediment. Depending on the support material used, some acetone might be needed in the water wash in order to facilitate the sedimentation during centrifuging.
12. After the final wash after a deposition has been made, the catalyst precursor is dried in air for at least 16 h at 323 K. Further depositions of Co and Re may then be performed on the catalyst precursor.
13. After the final deposition, the catalyst precursor is calcined in flowing air at 573 K for 16 h (ramp = 1 K/min).
14. Before the FT synthesis, the catalyst is reduced in hydrogen for 16 h at 673 K (ramp = 1 K/min).
15. Some ME recipes that result in amorphous Co phase, even after calcination of the catalyst precursor, needs an extra activation period in the FT reactor where steam is added to the catalyst during the FT synthesis (reductive conditions). After a couple of days, the Co phase has crystallized and needs to be re-reduced in order to reach its full potential activity and selectivity.

### References

[1] J.M. Pratt, G. Swinden, Chem. Commun. (1969) 1321.
[2] J.P. Chen, K.M. Lee, C.M. Sorensen, K.J. Klabunde, G.C. Hadjipanayis, J. Appl. Phys. 75 (1994) 5876.
[3] J.B. Nagy, Colloids and Surfaces 35 (1989) 201.
[4] Dong En Zhang et al, J. of magnetism and magnetic materials 3002 (2006) 290.
[5] G.N. Glavee, K.J. Klabunde, C.M. Sorensen, G.C. Hadjipanayis, Langmuir 9 (1993) 162.
[6] J.P. Chen, C.M. Sorensen, K.J. Klabunde, G.C. Hadjipanayis, Phys. Rev. B: Condens. Matter 51 (1995) 11527.
[7] A. Griboval-Constant, A.Y. Khodakov, R. Bechara, V.L. Zholobenko, Stud. Surf. Sci. Catal. 144 (2002) 609.
[8] A.Y. Khodakov, A. Griboval-Constant, R. Bechara, V.L. Zholobenko, J. Catal. 206 (2002) 230.
[9] D. Schanke, S. Eri, E. Rytter, C. Aaserud, A.-M. Hilmen, O.A. Lindvåg, E. Bergene, A. Holmen, Stud. Surf. Sci. Catal. 147 (2004) 301.
[10] Ø. Borg, S. Eri, E.A. Blekkan, S. Storsæter, H. Wigum, E. Rytter, A. Holmen, J. Catal. (2007), doi:10.1016/j.jcat.2007.03.008.
[11] R.C. Reuel, C.H. Bartholomew, J. Catal. 85 (1984) 78.
[12] A. Barbier, A. Tuel, I. Arcon, A. Kodre, G.A. Martin, J. Catal. 200 (2001) 106.
[13] G.L. Bezemer, J.H. Bitter, H.P.C.E Kuipers, H. Oosterbeek, J.E. Holewijn, X. Xu, F. Kapteijn, A.J. van Dillen, K.P. de Jong, J. Am. Chem. Soc. 128 (2006) 3956.
[14] J.L. Lemaitre, P. Govind Menon, F. Delannay, in: F. Delannay (Ed.), Characterization of Heterogeneous Catalysts, vol. 15, Marcel Dekker, New York, 1984, pp. 299.
[15] D. Schanke, S. Vada, E.A. Blekkan, A.-M. Hilmen, A. Hoff, A. Holmen, J. Catal. 156 (1995) 85.
[16] R.C. Reuel, C.H. Bartholomew, J. Catal. 85 (1984) 63.
[17] G.L. Haller, D.E. Resasco, Adv. Catal. 36 (1989) 173.
[18] E. Iglesia, Appl. Catal. A 161 (1997) 59.
[19] E. Iglesia, S.C. Reyes, R.J. Madon, S.L. Soled, Adv. Catal. 39 (1993) 221.
[20] J. Li, N.J. Coville, Appl. Catal. A 181 (1999) 201.
[21] S. Eriksson, U. Nylén, S. Rojas, M. Boutonnet, Appl. Catal. A 265 (2004) 207.

## Claims

1. A method for depositing metal particles on a support, comprising the following steps:
a) providing an organosol comprising a dispersed phase containing particles comprising a metal selected from cobalt, iron or nickel;
b) contacting a support material with the organosol from step a) so as to form a mixture of the organosol and the support material; and
c) adding a destabilisation agent to the mixture from step b) so as to destabilise the organsol, thereby depositing the particles on the support material.

2. A method according to claim 1, wherein the organosol of step a) is obtained from a water-in-oil type microemulsion comprising a dispersed phase containing ions of said metal, by reduction of said ions.

3. A method according to claim 2, wherein the reduction is performed by addition of BH₄⁻ ions or hydrazine, preferably BH₄⁻ ions, to the microemulsion.

4. A method according to any one of the preceding claims, wherein in step c) the destabilisation agent is added before any substantial spontaneous destabilisation of the organosol has occured.

5. A method according to any one of the preceding claims, wherein in step c) the destabilisation agent necessary for destabilising the organosol is added substantially in a single portion.

6. A method according to any one of the preceding claims, wherein in step c) water is added to the organosol before addition of the destabilisation agent.

7. A method according to any one of the preceding claims, wherein the destabilisation agent is tetrahydrofuran or acetone, preferably acetone.

8. A method according to any one of the preceding claims, wherein the particles have an average size of less than 50 nm, preferably less than 20 nm.

9. A method according to any one of the preceding claims, wherein the metal is cobalt or iron, preferably cobalt.

10. A method according to anyone of the preceding claims, wherein the support material has an average pore diameter of from about 10 to about 1000 nm, preferably from about 10 to about 500 nm.

11. A method according to anyone of the preceding claims, wherein the support material is γ-Al₂O₃, α-Al₂O₃, TiO₂, SiO₂, carbon nano fibers, carbon nano tubes or mixtures thereof, preferably γ-Al₂O₃ or TiO₂, most preferably TiO₂.

12. A method according to any one of the preceding claims, wherein the organosol comprises a continuous phase containing cyclohexane or xylene, preferably cyclohexane.

13. A method according to anyone of the preceding claims, wherein the organosol comprises a polyoxyethylene alkylphenyl ether, preferably a polyoxyethylene (x) nonylphenyl ether wherein x = 5 or 6, more preferably polyoxyethylene (6) nonylphenyl ether, as a surfactant.

14. A method according to any one of claims 2 to 13, wherein the microemulsion comprises a continuous phase containing cyclohexane or xylene, preferably cyclohexane.

15. A method according to any one of claims 2 to 14, wherein the microemulsion comprises a polyoxyethylene alkylphenyl ether, preferably a polyoxyethylene (x) nonylphenyl ether wherein x = 5 or 6, more preferably polyoxyethylene (6) nonylphenyl ether, as a surfactant.

16. A catalyst obtainable by the method according to any one of claims 1 to 15.

17. Use of a catalyst obtainable by the method according to any one of claims 1 to 16 as a catalyst for carbon monoxide hydrogenation or the Fischer-Tropsch synthesis, preferably the Fischer-Tropsch synthesis.
